# EUROPEAN PATENT APPLICATION

(11) **EP 4 414 613 A1**
(43) Date of publication of application: **14.08.2024**
(21) Application number: 22878401.3
(22) Date of filing: 28.09.2022
(51) Int. Cl.: F24C 1/00, F24C 7/00

(54) **HEATING COOKER**

(30) Priority: 04.10.2021 JP 2021163190
(71) Applicant: Panasonic Intellectual Property Management Co., Ltd., Kadoma-shi, Osaka 571-0057 (JP)
(72) Inventor: OTANI, Ryosuke, Kadoma-shi, Osaka 571-0057 (JP); HAYASHI, Takahiro, Kadoma-shi, Osaka 571-0057 (JP); YASUKOCHI, Daisuke, Kadoma-shi, Osaka 571-0057 (JP)
(74) Representative: SSM Sandmair
(86) International application number: PCT/JP2022/036234
(87) International publication number: WO 2023/058531

(57) **Abstract**

A heating cooker includes a heating chamber, a circulation fan, and an air passage. The heating chamber can accommodate a heating target. The circulation fan sucks air in the heating chamber and blows sucked air into the heating chamber to form a circulation flow passage in an inner space of the heating chamber. The air passage is disposed inside the heating chamber, and defines a flow rate and a blowing direction of air blown from the circulation fan to the heating chamber. The air passage is disposed in an upper part of the heating chamber and forms an upper space of the heating chamber. The air passage includes a flow guide and an outflow port communicating with the heating chamber.

## Description

### TECHNICAL FIELD

The present disclosure relates to a heating cooker.

### BACKGROUND ART

A heating cooker disclosed in PTL 1 includes a heating chamber, a circulation fan, a convection heater, and a flow guide. The heating chamber accommodates a heating target. The circulation fan sucks air in the heating chamber and blows sucked air into the heating chamber to form a circulation flow passage in an inner space of the heating chamber. The convection heater is disposed in front of the circulation fan to heat the air sucked from the heating chamber by the circulation fan. The flow guide allows the sucked air to blow downward from an entire top face.

### Citation List

### Patent Literature

PTL 1: Japanese Patent Unexamined Application No. 2020-112292

### SUMMARY OF THE INVENTION

An object of the present disclosure is to provide a heating cooker capable of more uniformly heating a heating target.

The heating cooker of the present disclosure includes a heating chamber, a circulation fan, and an air passage. The heating chamber can accommodate a heating target. The circulation fan sucks air in the heating chamber and blows sucked air into the heating chamber to form a circulation flow passage in an inner space of the heating chamber. The air passage is disposed inside the heating chamber and defines a flow rate and blowing direction of air blown from the circulation fan to the heating chamber. The air passage is disposed in an upper part of the heating chamber to form an upper space in the heating chamber. The air passage includes a flow guide and an outflow port communicating with the heating chamber.

The present disclosure provides the heating cooker capable of more uniformly heating the heating target.

### BRIEF DESCRIPTION OF DRAWINGS

FIG. 1 is a perspective view of a heating cooker in a state where a door is closed according to an exemplary embodiment of the present disclosure.
FIG. 2 is a perspective view of the heating cooker in a state where the door is opened according to the exemplary embodiment of the present disclosure.
FIG. 3 is a front view of the heating cooker in a state where the door is opened according to the exemplary embodiment of the present disclosure.
FIG. 4 is a longitudinal sectional view of the heating cooker according to the exemplary embodiment of the present disclosure.
FIG. 5 is a longitudinal sectional view of the heating cooker in a state where the door is opened according to the exemplary embodiment of the present disclosure.
FIG. 6 is a front view of a back wall of a heating chamber.
FIG. 7 is a front view of a convection device.
FIG. 8 is a perspective view of the convection device.
FIG. 9 is a perspective view of a convection heater.
FIG. 10 is a perspective view of a first air guide.
FIG. 11 is a perspective view of a circulation fan.
FIG. 12 is a perspective view of a second air guide.
FIG. 13 is a development perspective view of the convection device.
FIG. 14 is a longitudinal sectional view of a part of the heating cooker according to the exemplary embodiment.
FIG. 15 is a plan view of an upper space of the heating chamber seen from above.
FIG. 16 is a perspective view of an air passage.
FIG. 17 is a longitudinal sectional view of the heating cooker according to the exemplary embodiment.
FIG. 18 is a perspective view of a hot air generation mechanism.
FIG. 19 is an exploded perspective view of the hot air generation mechanism.
FIG. 20 is a fragmentary magnified sectional view of the heating cooker according to the exemplary embodiment.
FIG. 21 is an exploded perspective view of an empty heating detection sensor.

### DESCRIPTION OF EMBODIMENT

### (Basic knowledge behind the present disclosure)

When the inventors have arrived at the present disclosure, air blown from the circulation fan to the heating chamber is blown downward immediately after colliding with an air guide. With this structure, a direction and force of hot air blown downward vary by position and a blowing direction is inclined. This results in uneven heating of a heating target. Under the circumstances, the inventors have reached the main subject of the present disclosure to solve the above disadvantage.

The present disclosure provides a heating cooker capable of more uniformly heating the heating target.

### (Exemplary embodiment)

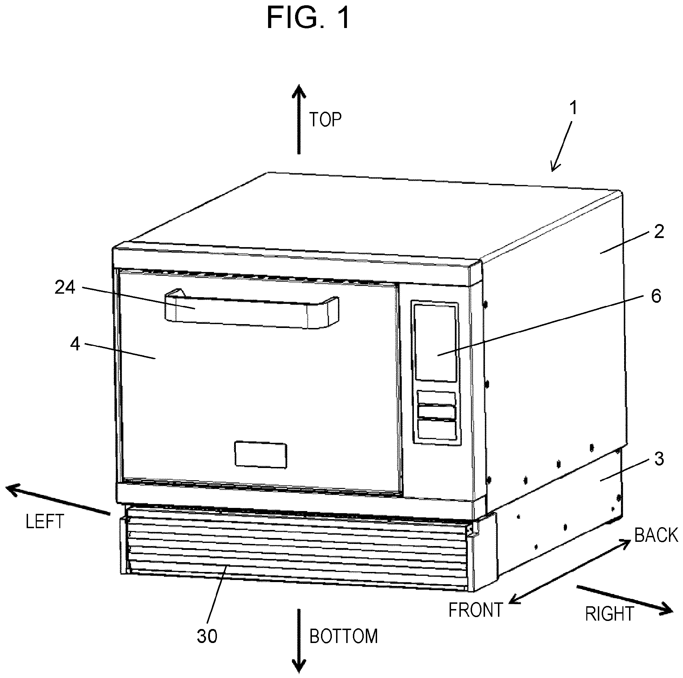

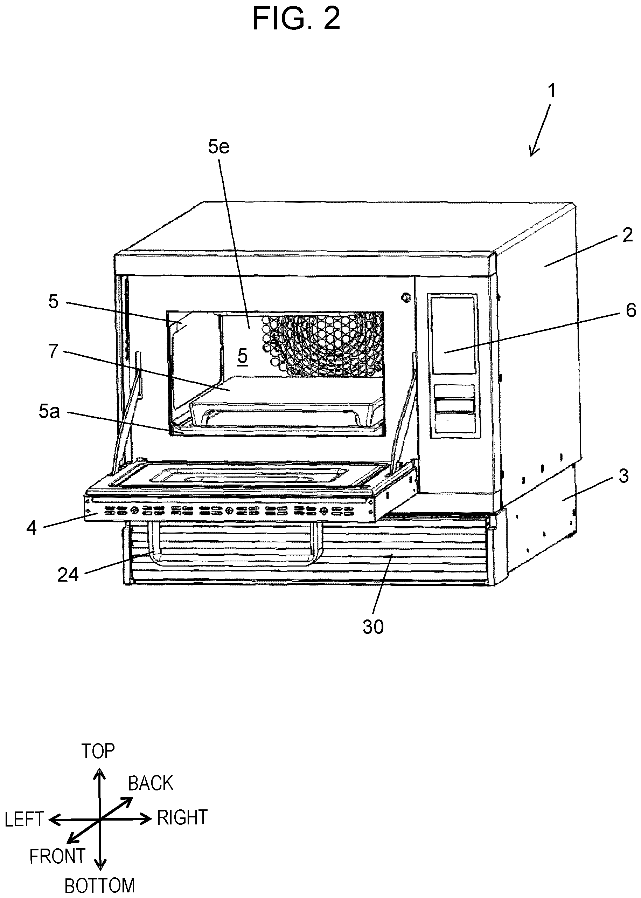

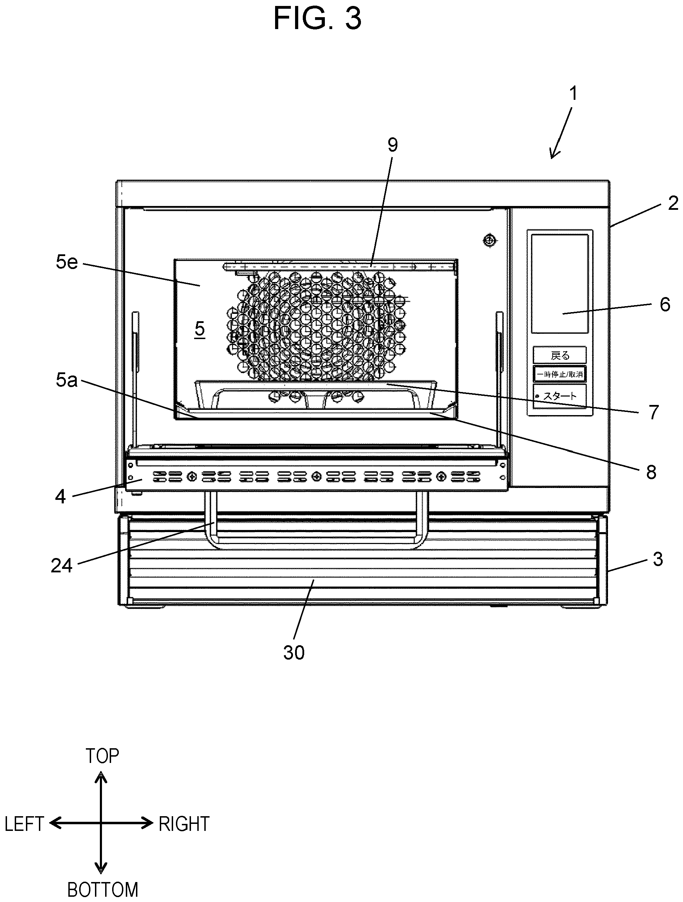

Heating cooker 1 according to an exemplary embodiment of the present disclosure is described below with reference to the drawings. FIG. 1 is a perspective view of heating cooker 1 in a state where door 4 is closed. FIG. 2 is a perspective view of heating cooker 1 in a state where door 4 is opened. FIG. 3 is a front view of heating cooker 1 in a state where door 4 is opened.

In the exemplary embodiment, as illustrated in the drawings, a vertical top is defined as top and the side opposite to the top is bottom. Right and left of heating cooker 1 seen from a user are defined as right and left. A side of heating cooker 1 to the user when the user uses the heating cooker is defined as front and a side opposite to the front is defined as back of heating cooker 1.

### [Overall structure]

Heating cooker 1 in the exemplary embodiment is a large-output heating cooker for commercial use such as heating cookers used in convenience stores and fast food shops. Heating cooker 1 executes one of microwave heating, radiation heating, and hot air circulation heating or at least two or more sequentially or simultaneously.

As illustrated in FIG. 1 to FIG. 3, heating cooker 1 includes main body 2, heating chamber 5, machine chamber 3, and door 4. Heating chamber 5 is disposed inside main body 2. Machine chamber 3 is disposed below heating chamber 5 inside main body 2. Door 4 is disposed on a front face of main body 2 to cover a front opening of heating chamber 5.

Door 4 has handle 24. When the user pulls handle 24 to the front, door 4 opens by rotating about hinges disposed on both sides of door 4 at a lower part. Control display 6 is disposed on the front face of main body 2 and displays setting operations by the user and setting information of heating cooker 1.

A heating target inside heating chamber 5 is heated typically by microwave in a state where door 4 is closed (FIG. 1). The heating target is placed inside heating chamber 5 and taken out from heating chamber 5 in a state where door 4 is opened (FIG. 2).

Heating chamber 5 in main body 2 has a substantially rectangular parallelepiped space with front opening. Door 4 covers the front opening to seal heating chamber 5 so that heating chamber 5 can accommodate the heating target to be heated and cooked. In this state of housing the heating target, the heating target is heated and cooked by at least one of a hot air circulation heating mechanism, a radiation heating mechanism, and a microwave heating mechanism.

The hot air circulation heating mechanism is disposed at the back and near a top face of heating chamber 5. The radiation heating mechanism is disposed near the top face of heating chamber 5. The microwave heating mechanism is disposed below bottom wall 5a of heating chamber 5. Bottom wall 5a of heating chamber 5 is made of a material that easily passes through microwaves, such as glass or ceramic.

Table 7 for placing the heating target and tray 8 disposed below table 7 can be housed inside heating chamber 5. Tray 8 catches fat and the like dripping from the heating target.

Table 7 is removable and is, for example, a ceramic table. A board-like member for placing the heating target and four legs supporting the board-like member are integrally configured in table 7. Tray 8 is fixed on the bottom wall of the main body of the heating cooker.

Tray 8 is made of ceramic, and more particularly, made of cordierite. The cordierite is ceramic constituted of magnesium oxide, aluminum oxide, and silicon oxide, and has low thermal expandability and good thermal shock resistance. Therefore, although a microwave emission is concentrated on a surface of table 7, there is no problem with safety of table 7.

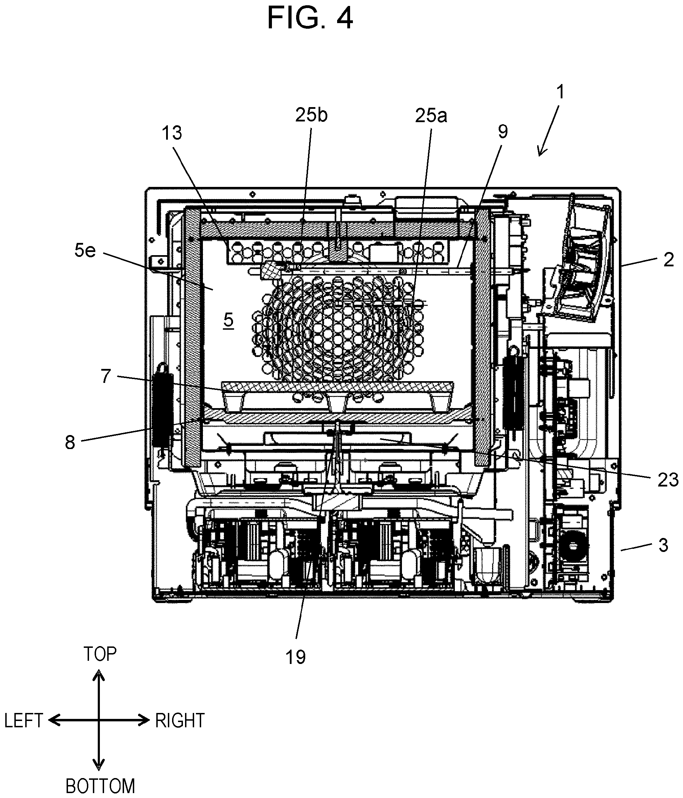

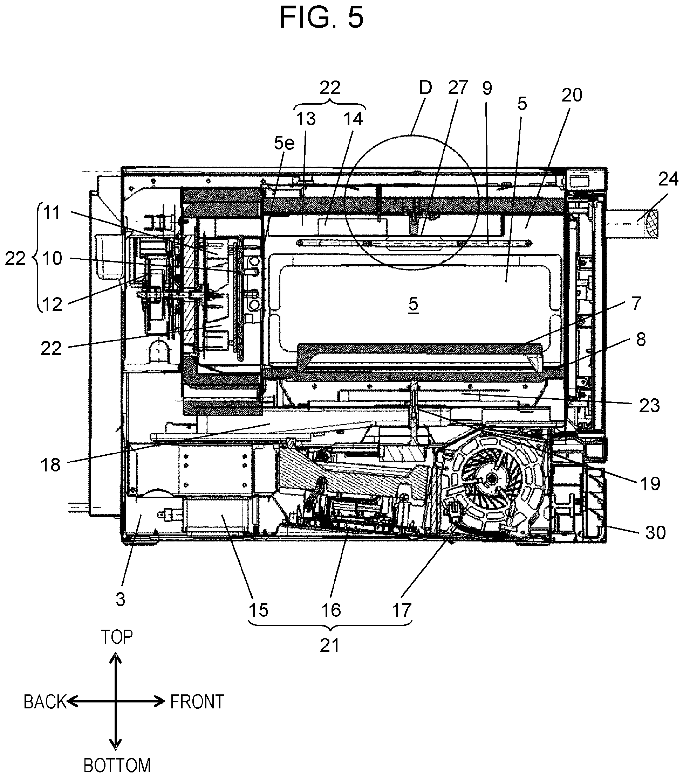

FIG. 4 is a longitudinal sectional view of heating cooker 1 seen from the front. In other words, in FIG. 4, a front side in the drawing is the front of heating cooker 1. FIG. 5 is a longitudinal sectional view of heating cooker 1 seen from the left. In other words, a right side in FIG. 5 is the front of heating cooker 1.

As illustrated in FIG. 4 and FIG. 5, grill heater 9 configuring a radiation heater is disposed near the top face of heating chamber 5. Grill heater 9 is configured with a single sheathed heater bent and disposed near the top face. Grill heater 9 is used in a grill mode (radiation heating) for heating and cooking the heating target by radiation heat.

In FIG. 5, microwave heater 21 is disposed inside machine chamber 3. Microwave heater 21 includes magnetron 15, inverter 16, and cooling fan 17. Microwave heater 21 is controlled by a controller (not illustrated).

The magnetron generates a microwave. Inverter 16 drives magnetron 15. Cooling fan 17 takes in air through ventilation panel 30 disposed on a front face of machine chamber 3, and feeds intake air to the back. This air cools inverter 16 and magnetron 15 disposed inside machine chamber 3.

Microwave heater 21 includes waveguide 18 and microwave supply part 19. Waveguide 18 guides the microwave generated by magnetron 15 to below the center of heating chamber 5. Microwave supply part 19 is disposed below the center of heating chamber 5, and is an opening formed on a top face at an end of waveguide 18. Microwave supply part 19 emits the microwave guided by waveguide 18 to inside heating chamber 5.

Stirrer 23 is disposed above microwave supply part 19 so as to stir the microwave emitted from microwave supply part 19. Stirrer 23 is driven by a stirrer drive unit (not illustrated) and has blades to stir the microwave emitted from microwave supply part 19. The stirrer drive unit is a motor disposed inside machine chamber 3.

Accordingly, the microwave stirred below heating chamber 5 is emitted to inside heating chamber 5 and heats the heating target placed on table 7.

As illustrated in FIG. 4 and FIG. 5, heating cooker 1 in the exemplary embodiment includes hot air generation mechanism 22 in addition to the radiation heater (grill heater 9) and microwave heater 21. Hot air generation mechanism 22 is controlled by a controller (not illustrated) including a microcomputer and semiconductor memory. Hot air generation mechanism 22 is disposed inside main body 2 at the back of heating chamber 5, and includes convection heater 10, circulation fan 11, and fan drive unit 12.

Convection heater 10 is a heat source for hot air circulation heating. Circulation fan 11 is an air source. Fan drive unit 12 is a motor for driving circulation fan 11. A plurality of openings are created in back wall 5e of heating chamber 5.

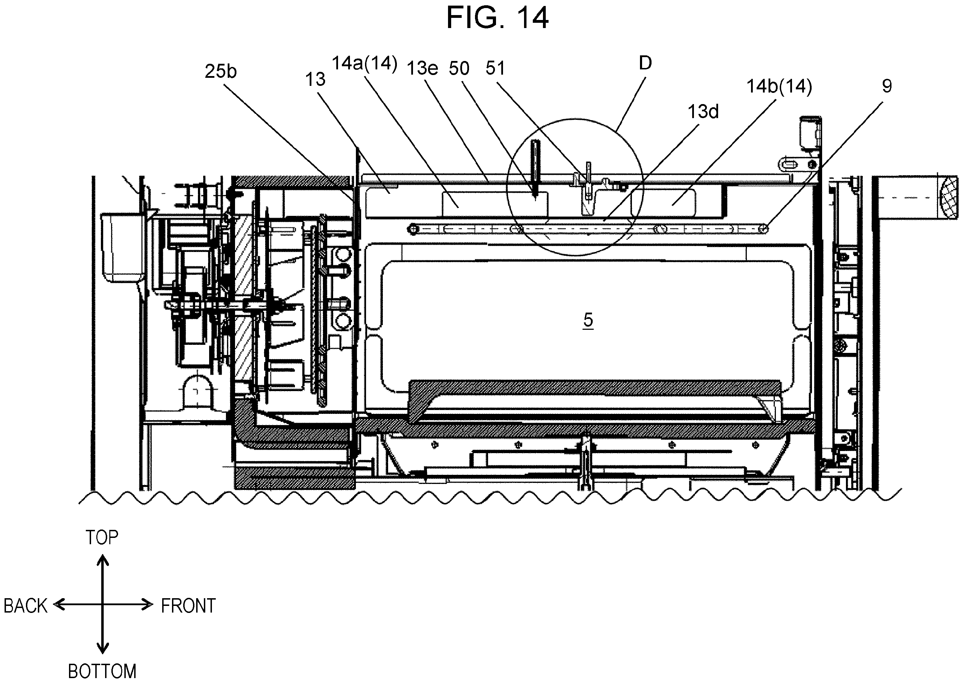

FIG. 14 is a longitudinal sectional view of a part of heating cooker 1. When circulation fan 11 is driven, air in heating chamber 5 is sucked through the plurality of openings and the air reaches hot air generation mechanism 22. This air becomes hot air by convection heater 10 and circulation fan 11 in hot air generation mechanism 22. This hot air is blown into heating chamber 5 through outflow port 13d (FIG. 14) created in a bottom wall of air passage 13. The plurality of openings created in back wall 5e will be described later.

Hot air generation mechanism 22 includes air passage 13 and flow guide 14 described later. Air passage 13 and flow guide 14 are disposed near the top face of heating chamber 5 and define a flow rate and a blowing direction of air from outflow port 13d to heating chamber 5.

Air passage 13 and flow guide 14 are disposed in an upper part of heating chamber 5 to form an upper space in heating chamber 5 and define a flow rate and a blowing direction of air passing through the upper space and blown into heating chamber 5.

As illustrated in FIG. 14, heating cooker 1 further includes in-chamber temperature detection sensor 50 and empty heating detection sensor 51. In-chamber temperature detection sensor 50 is disposed near the top face of heating chamber 5 to detect a temperature inside heating chamber 5. Empty heating detection sensor 51 is disposed near the top face of heating chamber 5 and is capable of detecting heating without the heating target in heating chamber 5, a so-called "empty heating". For example, in-chamber temperature detection sensor 50 and empty heating detection sensor 51 are configured with thermistors.

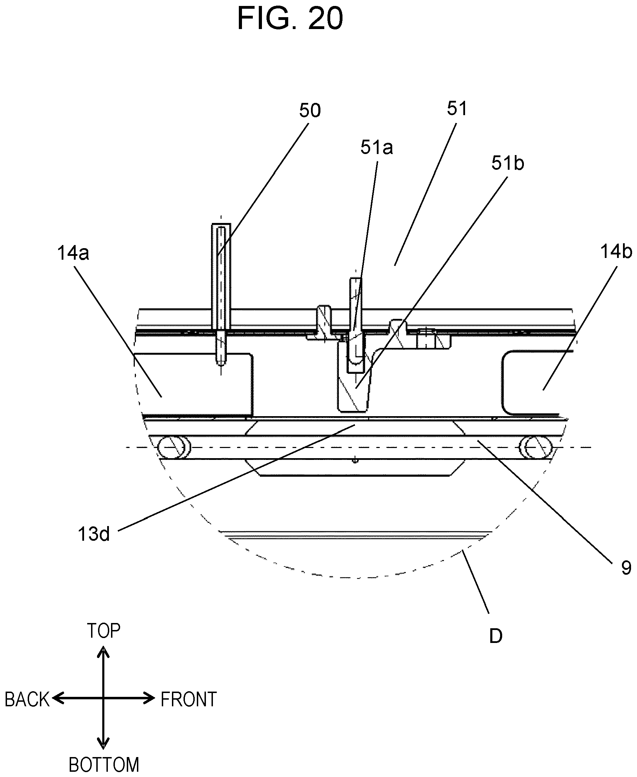

FIG. 20 is a sectional view of heating chamber 1 in which an area marked with circle D in FIG. 5 is magnified to illustrate a vicinity of in-chamber temperature detection sensor 50 and empty heating detection sensor _51.

A basic structure of thermistor will be described using in-chamber temperature detection sensor 50 as an example. A thermistor chip that will be a detection end of in-chamber temperature detection sensor 50 is housed inside a projecting end of a protective tube (e.g., thin stainless steel tube) with a closed tip. An inorganic heat-resistant filler having good heat conductivity is filled in a gap between the thermistor chip and the protective tube. In-chamber temperature detection sensor 50 as configured above is disposed upright on flow guide 14 at substantially the center of the top face of heating chamber 5 (FIG. 14).

A thermal time constant of the thermistor affects responsiveness of the thermistor. The thermistor demonstrates better characteristics with smaller thermal time constant. The thermistor in the exemplary embodiment has the thermal time constant within 60 seconds including the protective tube. The thermistor of empty heating detection sensor 51 also has similar configuration, and thus the description thereof is omitted.

A position of in-chamber temperature detection sensor 50 is closely related to positions of components of the radiation heater (grill heater 9), microwave heater 21, and hot air generation mechanism 22. More specifically, in-chamber temperature detection sensor 50 is disposed at a predetermined position in a circulation flow passage formed by hot air generation mechanism 22. In-chamber temperature detection sensor 50 detects a temperature at least during the operation of circulation fan 11 in hot air generation mechanism 22.

A position of empty heating detection sensor 51 is also closely related to the positions of the components of the radiation heater (grill heater 9), microwave heater 21, and hot air generation mechanism 22. More specifically, empty heating detection sensor 51 is disposed at a predetermined position where microwave radiated through bottom wall 5a of heating chamber 5 can be absorbed. Empty heating detection sensor 51 detects empty heating by using a characteristic that the microwave concentrates on dielectric when heating is performed without the heating target in heating chamber 5.

As described above, the plurality of openings is created in back wall 5e of heating chamber 5. A hot air circulation heating area is disposed at the back of back wall 5e. Convention heater 10, circulation fan 11, and fan drive unit 12 that are components of hot air generation mechanism 22 are disposed in the hot air circulation heating area. Hot air generation mechanism 22 further includes air passage 13 and flow guide 14 disposed in heating chamber 5 near the top face. Arrangement, function, and structure of air passage 13 and flow guide 14 that are an air passage inside the heating chamber will be described later.

### [Detailed structure of hot air generation mechanism]

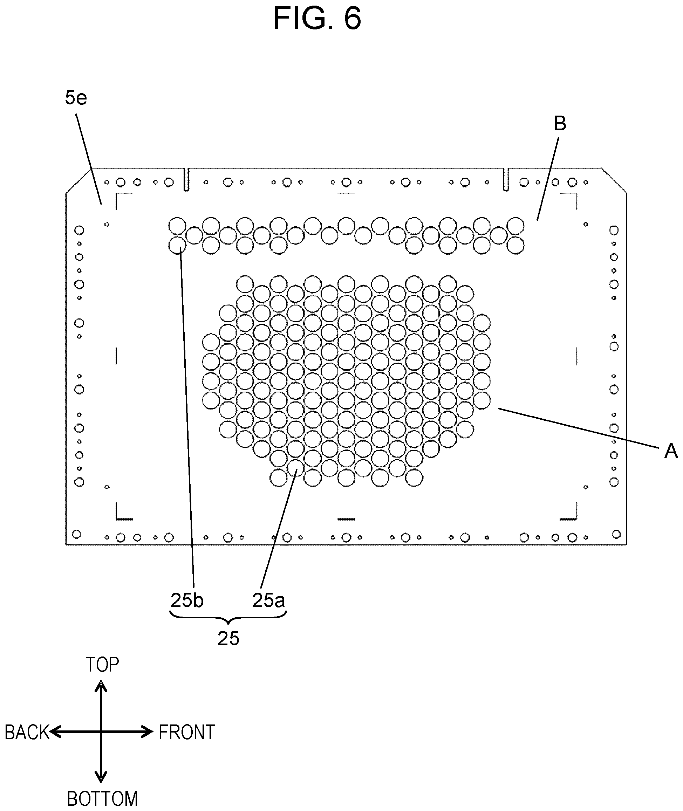

FIG. 6 is a front view of back wall 5e of heating chamber 5. As illustrated in FIG. 6, opening group 25 is created in central area A and upper area B of back wall 5e by punching. Opening group 25 has a shape that inhibit the microwave emitted inside heating chamber 5 from being leaked outside heating chamber 5.

First opening group 25a is opening group 25 formed in central area A at the center of back wall 5e. First opening group 25a has a function as an intake port to suck air inside heating chamber 5 to the back side.

Second opening group 25b is opening group 25 formed in upper area B extending in a width direction (right-left direction) at an upper part of back wall 5e. Second opening group 25b has a function as a blowing port to blow air (hot air) into heating chamber 5. More specifically, the air is blown through second opening group 25b along air passage 13 toward the upper space in heating chamber 5.

In the exemplary embodiment, openings of first opening group 25a and second opening group 25b have the same shape. However, openings of first opening group 25a and second opening group 25b may have a preferred shape according to specifications (e.g., intake quantity and blowing quantity) for heating cooker 1.

Each of first opening group 25a and second opening group 25b in the exemplary embodiment has an open section formed of an assembly of numerous small openings, and first opening group 25a and second opening group 25b are arranged with a predetermined distance in between. However, the open section may not be the assembly of small openings, and the open section may be one large opening. Still more, first opening group 25a may be adjacent to second opening group 25b.

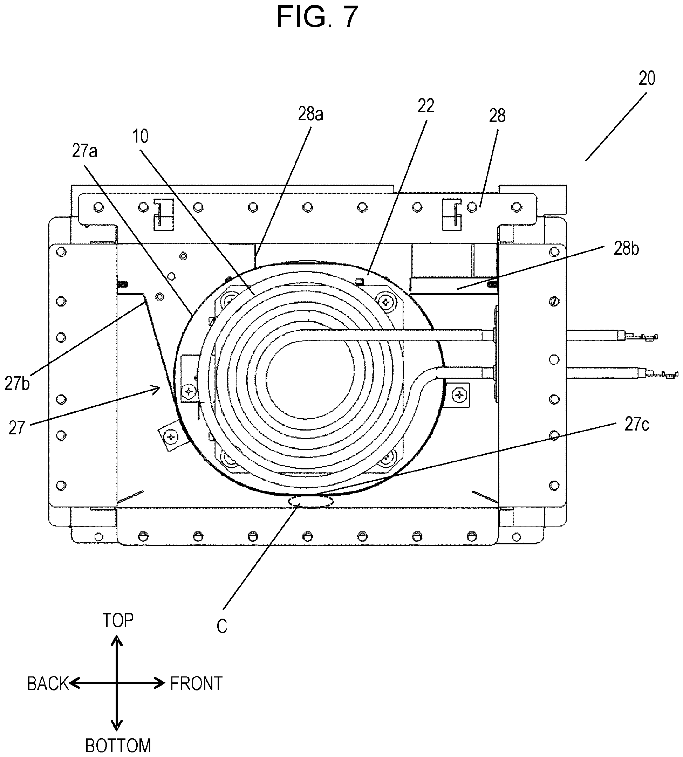

FIG. 7 is a front view of convection device 20 disposed in the hot air circulation heating area. FIG. 7 illustrates convection device 20 in a state back wall 5e is removed, and heating chamber 5 will be disposed to the front in FIG. 7.

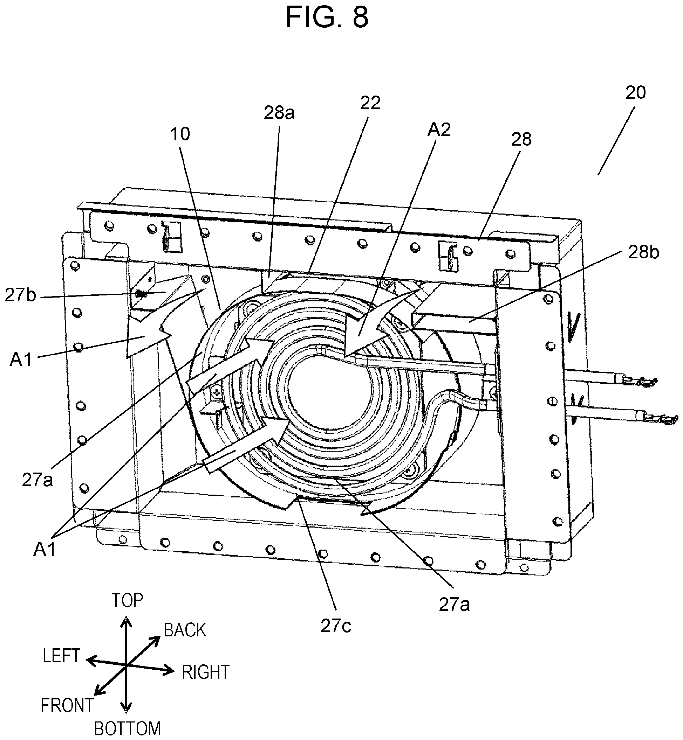

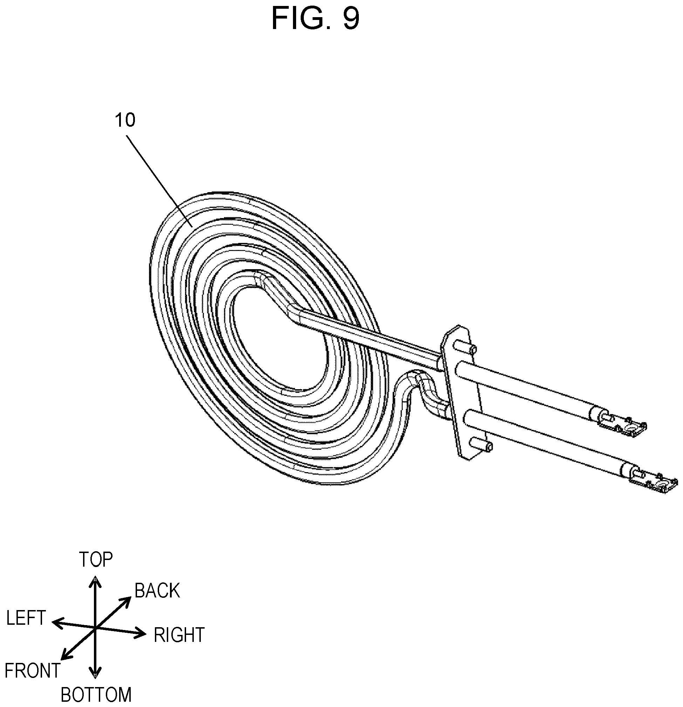

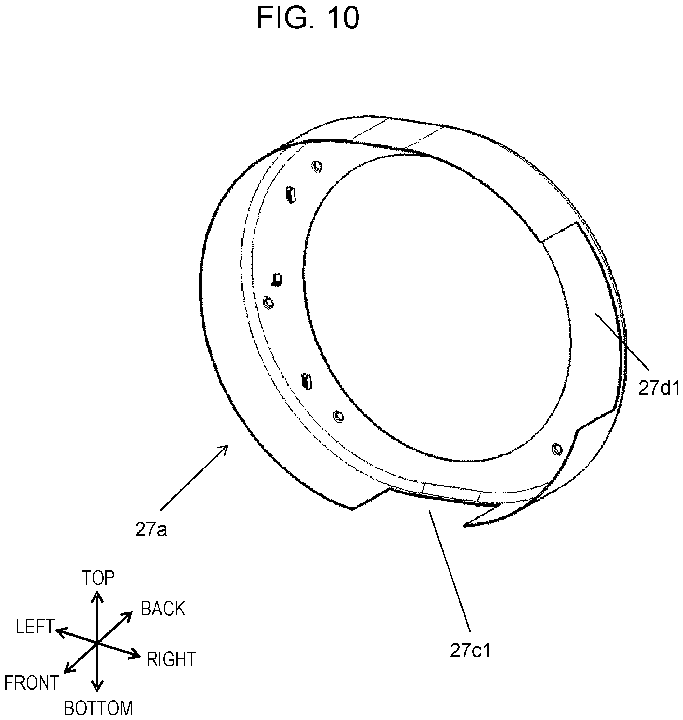

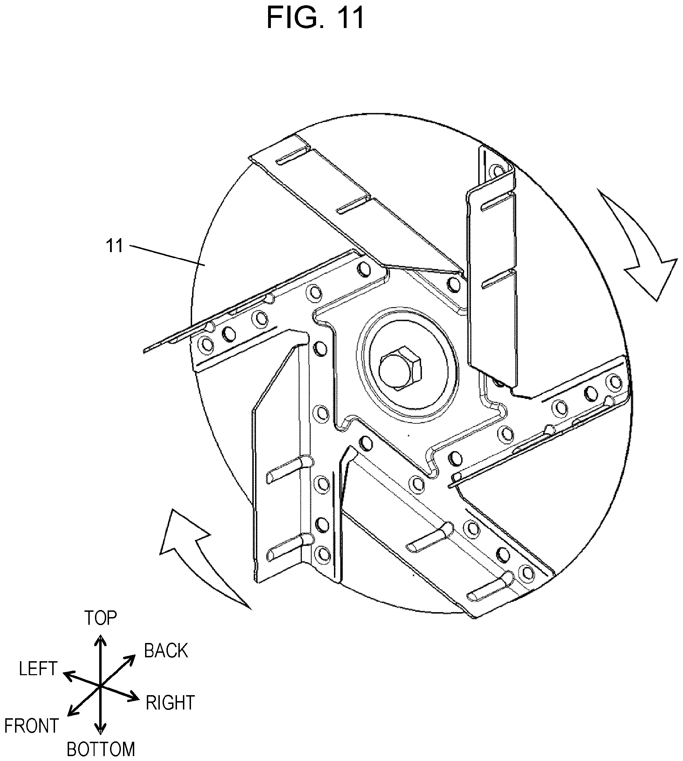

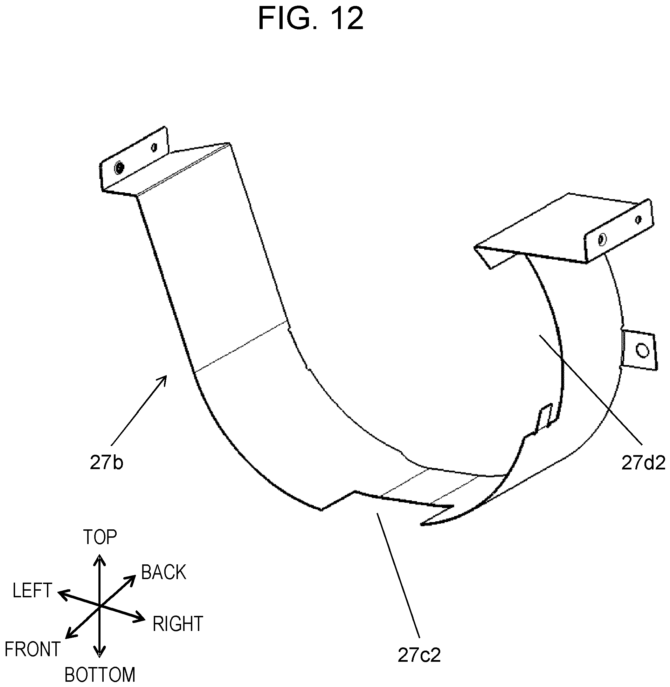

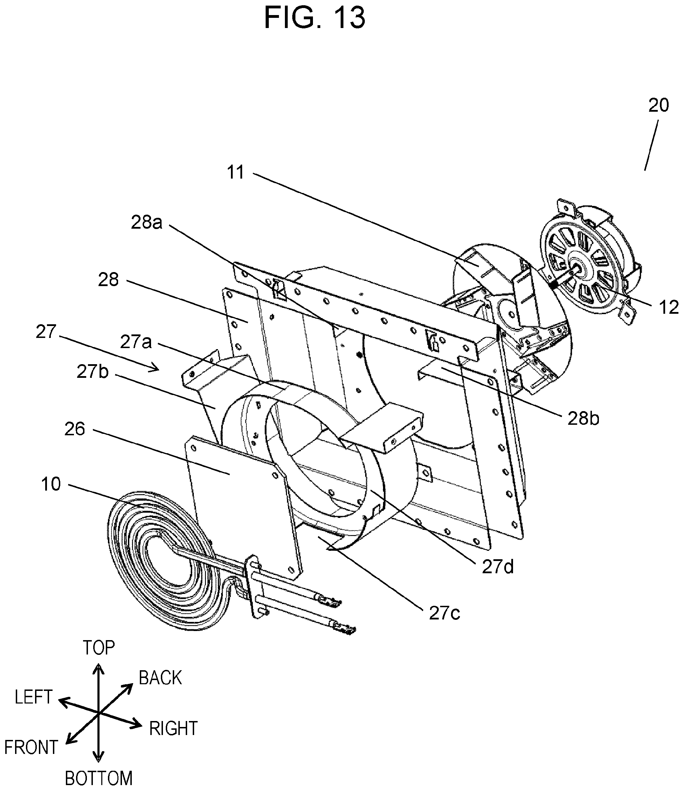

FIG. 8 is a perspective view of convection device 20 disposed in the hot air circulation heating area. FIG. 9 to FIG. 12 are perspective views of components of convention device 20. More specifically, FIG. 9 is a perspective view of convection heater 10. FIG. 10 is a perspective view of first air guide 27a. FIG. 11 is a perspective view of circulation fan 11. FIG. 12 is a perspective view of second air guide 27b. FIG. 13 is an exploded perspective view of convection device 20.

As illustrated in FIG. 7 and FIG. 13, convection heater 10 is disposed at the back of back wall 5e. As illustrated in FIG. 9, convection heater 10 is configured with a spiral sheath heater. A spiral portion of convection heater 10 faces central area A of back wall 5e in FIG. 5. Convection heater 10 heats air sucked through first opening group 25a in central area A.

As illustrated in FIG. 13, circulation fan 11 and fan drive unit 12 are disposed at the back of convection heater 10. Circulation fan 11 is a centrifugal fan that sucks air from a central portion of circulation fan 11 and blows air in a centrifugal direction.

Air sucked from heating chamber 5 by circulation fan 11 is heated by convection heater 10 and becomes hot air. This hot air passes through catalyst 26 for purification, is drawn into circulation fan 11 inside hot air circulation frame 28, and is blown in the centrifugal direction. In the exemplary embodiment, as illustrated in FIG. 11, circulation fan 11 rotates clockwise in a front view, which is a view seen from the front.

As illustrated in FIG. 13, a flow guide including air guide frame 27 and hot air circulation frame 28 is disposed around convection heater 10 and circulation fan 11. Air guide frame 27 includes first air guide 27a (FIG. 10) and second air guide 27b (FIG. 12).

First air guide 27a is a round frame disposed around convection heater 10. Second air guide 27b guides air blown in the centrifugal direction by circulation fan 11 to be blown along the top face of heating chamber 5.

Air guide frame 27 is fixed onto hot air circulation frame 28 having a square frame shape and surrounding top, bottom, right, and left of air guide frame 27. An area defined by a round frame of first air guide 27 faces central area A of back wall 5e.

Accordingly, air sucked from heating chamber 5 through central area A of back wall 5e is heated by convection heater to become hot air, and the hot air is sucked through the central portion of circulation fan 11. Then, second air guide 27b disposed around circulation fan 11 guides the hot air sucked by circulation fan 11 to near the top face of heating chamber 5.

The hot air guided to near the top face of heating chamber 5 is sent forward along an inner top face of hot air circulation frame 28. Sheet-like third air guide 28a is disposed on an inner side face of the top face of hot air circulation frame 28. Third air guide 28a allows the hot air guided to near the top face to be substantially uniformly blown along the top face of heating chamber 5.

Sheet-like fourth air guide 28b is disposed on a right inner side face of hot air circulation frame 28. Fourth air guide 23b allows the hot air guided to near the top face by second air guide 27b to be blown toward air passage 13.

In the exemplary embodiment, hot air circulation frame 28 includes single third air guide 28a and single fourth air guide 28b. However, hot air circulation frame 28 may have a plurality of third air guides 28a and a plurality of fourth air guides 28b.

As illustrated in FIG. 11, circulation fan 11 rotates clockwise in a front view. Therefore, to guide the hot air to heating chamber 5, third air guide 28a is disposed at a position about 1/3 of a width of the top inner face of hot air circulation frame 28 from the left end of the top inner face of hot air circulation frame 28.

Fourth air guide 28b is disposed protruding horizontally from an upper part of a right inner side face of hot air circulation frame 28, and guides the hot air to air passage 13. Third air guide 28a and fourth air guide 28b are disposed at appropriate positions according to specifications for circulation fan 11 and the shape of hot air circulation frame 28.

Hot air circulation frame 28 has a heat insulating frame (not illustrated) disposed via a heat insulating material (not illustrated) on an outer periphery of hot air circulation frame 28 in order to prevent heat transmission outside.

As indicated by arrows A1 in FIG. 8, air is taken in through the central portion (central area A of back wall 5e) of the hot air circulation heating area. This air is guided by first air guide 27a and heated by convection heater 10. Then, the hot air is sucked by circulation fan 11.

The hot air sucked by circulation fan 11 is blown to near the top face of heating chamber 5, indicated by arrow A2 in FIG. 8, by second air guide 27b and hot air circulation frame 28 (third air guide 28a and fourth air guide 28b) disposed on an outer side of circulation fan 11.

### [Structure of air guide frame]

Air guide frame 27 has notch 27c on a part of its bottom face. In a conventional air guide frame without notch 27c, residue may accumulate on an inner bottom face of the air guide frame. The residue in this case is food residue taken in by circulation fan 11.

Still more, in the conventional air guide frame, detergent may accumulate or detergent may adhere to the residue accumulated on the inner bottom face of air guide frame 27.

According to the exemplary embodiment, notch 27c disposed on a part of the bottom face of air guide frame 27 is capable of preventing accumulation of residue or detergent on the air guide frame.

First air guide 27a that is a round frame, as illustrated in FIG. 10, is disposed around convection heater 10. First air guide 27a allows air entering inside convection device 20 by circulation fan 11 to pass through convection heater 10.

First air guide 27a has a substantially cylindrical shape in the exemplary embodiment. First air guide 27a has third notch 27d1 to externally extend convection heater 10 inside first air guide 27a.

First air guide 27a has first notch 27c1 disposed on a part of its bottom face. As illustrated in FIG. 10, first notch 27c1 is substantially rectangular, and extends from a front edge of first air guide 27a to almost a back edge of first air guide 27a. First notch 27c1 is disposed on a substantially horizontal portion of the bottom face of first air guide 27a.

The substantially horizontal portion on the bottom face of first air guide 27a is a position closest to the inner bottom face of hot air circulation frame 28. Space C (dotted oval circle in FIG. 7) is disposed between the bottom face of first air guide 27a and the inner bottom face of hot air circulation frame 28.

Second air guide 27b is disposed around circulation fan 11 so as to guide air blown in the centrifugal direction of circulation fan 11 to near the top face of heating chamber 5. As illustrated in FIG. 12, second air guide 27b has a substantially U shape with an opening in its upper part. Second air guide 27b guides air to near the top face of heating chamber 5 through this opening.

Second air guide 27b has fourth notch 27d2 to extend a part of convection heater 10 disposed inside second air guide 27b to outside second air guide 27b. A depth of second air guide 27b is larger than that of first air guide 27a in order to guide the air fed by circulation fan 11 to near the top face of heating chamber 5.

Second air guide 27b has second notch 27c2 disposed on a part of its bottom. As illustrated in FIG. 12, second notch 27c2 has a shape and a depth same as first notch 27c1 of first air guide 27a. Second notch 27c2 is disposed on a substantially horizontal portion at the bottom face of second air guide 27b.

The substantially horizontal portion at the bottom face of second air guide 27b is a position closest to the inner bottom face of hot air circulation frame 28. Space C (dotted oval circle in FIG. 7) is disposed between the bottom face of second air guide 27b and the inner bottom face of hot air circulation frame 28.

Second air guide 27b is disposed outside first air guide 27a and partially contacts first air guide 27a. Since second air guide 27b has the opening, first air guide 27a and second air guide 27b contact mostly in a lower half portion. In other words, first air guide 27a is overlaid on the inner side of second air guide 27b having substantially the U shape.

More specifically, first air guide 27a and second air guide 27b are disposed such that a position of first notch 27c1 and a position of second notch 27c2 mostly overlap in top-bottom, right-left, and front-back directions. This structure forms notch 27c of air guide frame 27.

As described above, a structure that prevents accumulation of residue on the upper bottom face of first air guide 27a is preferable. Accordingly, the present disclosure is not limited to the above structure. For example, second notch 27c2 of second air guide 27b may have dimensions larger than that of first notch 27c1 of first air guide 27a in the right-left and front-back directions. Still more, the shape of notch 27c is not limited to rectangular

As illustrated in FIG. 7, space C is disposed between the bottom face of air guide frame 27 and the bottom face of hot air circulation frame 28, i.e., directly below notch 27c. Therefore, the residue drops through notch 27c to the inner bottom face of hot air circulation frame 28. Accordingly, even when residue enters inside air guide frame 27, the residue can be discharged outside air guide frame 27.

Notch 27d of air guide frame 27 is formed similarly to notch 27c of air guide frame 27. In other words, first air guide 27a and second air guide 27b are disposed such that a position of third notch 27d1 and a position of fourth notch 27d2 mostly overlap in the top-bottom, right-left, and front-back directions. With this structure, notch 27d of air guide frame 27 is formed.

Convection heater 10 disposed inside air guide frame 27 can be partially extended outward through notch 27d as formed above.

### [Peripheral structure of flow guide]

As described above, hot air is blown from the hot air circulation heating area to near the top face of heating chamber 5. This hot air flows into air passage 13 in hot air generation mechanism 22. In air passage 13, flow guide 14 forms a hot air path. Air passage 13 and flow guide 14 are disposed in a space formed in an upper part of heating chamber 5.

FIG. 14 is a longitudinal sectional view of heating cooker 1 illustrating arrangement of air passage 13 and flow guide 14 inside heating chamber 5. In FIG. 14, the left side is the back and the right side is the front. Only a major structure inside heating chamber 5 is illustrated in FIG. 14.

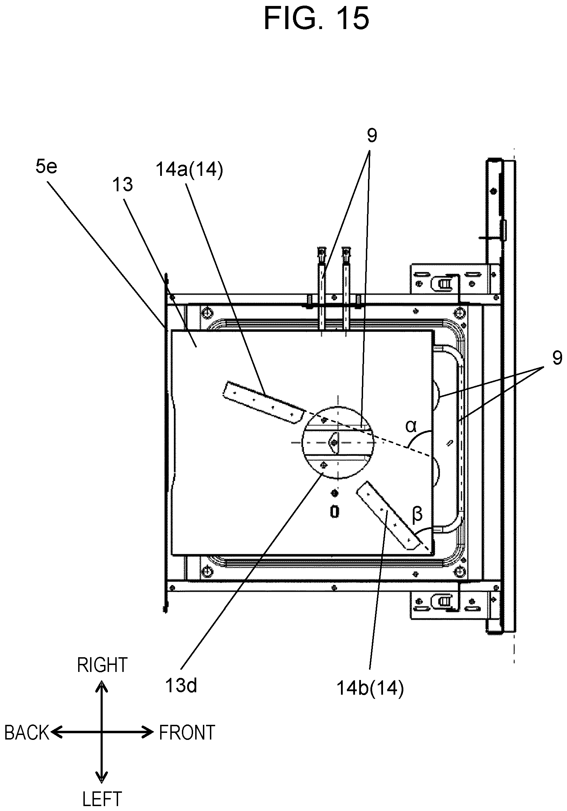

FIG. 15 is a plan view of the upper space of heating chamber 5 seen from above. FIG. 15 illustrates arrangement of air passage 13, flow guide 14, and grill heater 9. In FIG. 15, the hot air flows from the back (left side) to the front (right side).

The hot air is blown from back wall 5e near the top face of heating chamber 5. This hot air flows, at a predetermined wind pressure (flow rate), through a circulation flow passage inside the upper space of heating chamber 5 formed by air passage 13 and flow guide 14.

Air passage 13 has inflow port 13a disposed on its back side. The hot air blown from upper area B of back wall 5e flows into air passage 13 via inflow port 13a. This hot air is guided by flow guide 14 and blown at the predetermined wind pressure (flow rate) toward grill heater 9 disposed near the top face of heating chamber 5.

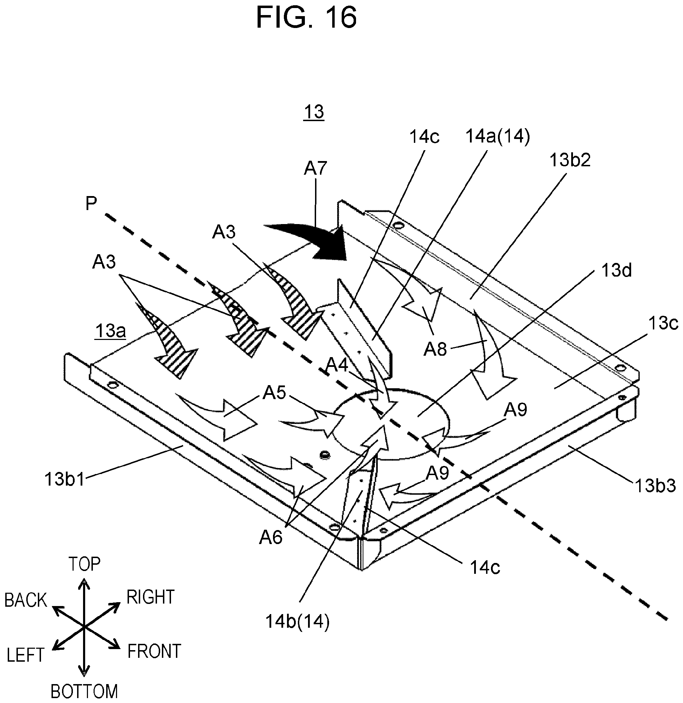

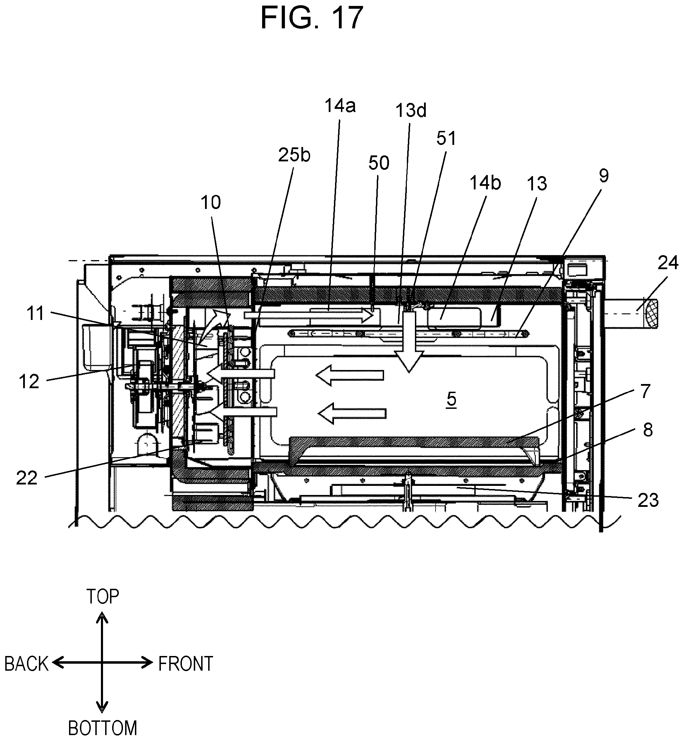

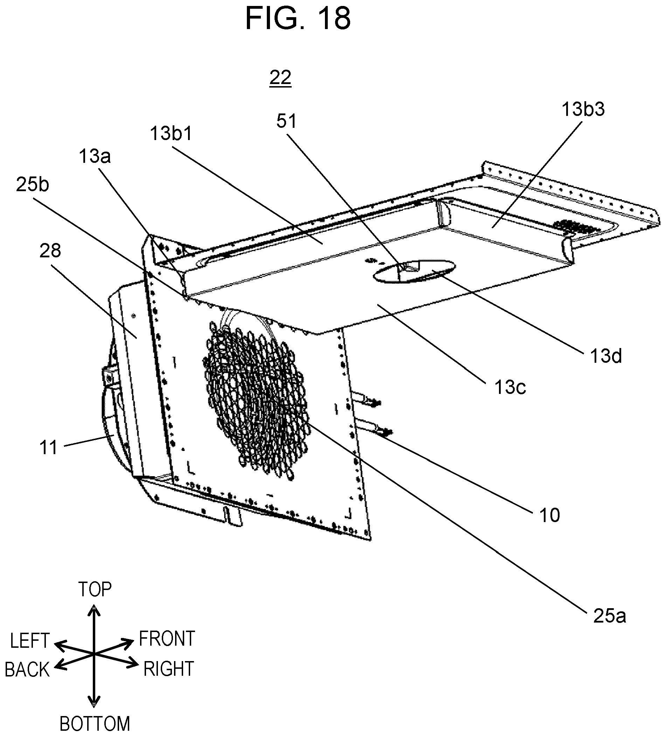

FIG. 16 is a perspective view of air passage 13. FIG. 17 is a longitudinal view of heating cooker 1 illustrating a circulating flow inside heating chamber 5. FIG. 17 only illustrates an upper part above machine chamber 3 of heating cooker 1. FIG. 18 is a perspective view of hot air generation mechanism 22.

As illustrated in FIG. 14 to FIG. 16, air passage 13 includes a plurality of flow guides 14 (first flow guide 14a and second flow guide 14b) and outflow port 13d communicating with heating chamber 5. Outflow port 13d is round, in particular, a perfect circle, and is disposed at a position substantially the center of heating chamber 5 in a plan view.

Air passage 13 forms the upper space partitioned by a plurality of walls, and is configured with upper wall 13e, sheet-like bottom wall 13c, and three side walls. The three side walls are side wall 13b1, side wall 13b2, and side wall 13b3. Side walls 13b1 to 13b3 are respective side walls to the left, right, and front of air passage 13 in a front view. The side wall is not disposed at the back of air passage 13, and inflow port 13a is disposed to let the hot air come in. Note that upper wall 13e may be configured with a part of air passage 13 or the top face of heating chamber 5.

With this structure, air passage 13 forms a semi-isolated space surrounded by side walls 13b1, 13b2, and 13b3 except for inflow port 13a and outflow port 13d. Air passage 13 defines a flow passage of air.

Air blown through second opening group 25b flows into inflow port 13a. As illustrated in FIG. 18, air passage 13 contacts second opening group 25b at inflow port 13a disposed at its back. Inflow port 13a and second opening group 25b overlap in a front view. With this structure, air blown by circulation fan 11 can be taken into air passage 13 through second opening group 25b.

As illustrated in FIG. 15 and FIG. 16, flow guide 14 includes first flow guide 14a and second flow guide 14b. Each of first flow guide 14a and second flow guide 14b includes guide face 14c that defines a path of air blown from circulation fan 11 through second opening group 25b. Guide face 14c is disposed substantially perpendicular to bottom wall 13c of air passage 13 (FIG. 16).

First flow guide 14a is disposed behind outflow port 13d. First flow guide 14a is disposed at a position shifted from the center in the right-left direction (center line P in FIG. 16) to a side where a relatively small quantity of air is blown from circulation fan 11 to heating chamber 5.

Second flow guide 14b is disposed in front of outflow port 13d. Second flow guide 14b is disposed at a position shifted from the center in the right-left direction (center line P in FIG. 16) to a side where a relatively large quantity of air is blown from circulation fan 11 to heating chamber 5.

This arrangement can guide the hot air blown in a plurality of directions to outflow port 13d, and then direct the hot air mostly right downward in heating chamber 5 from outflow port 13d.

### [Air flow in hot air generation mechanism and arrangement of flow guide]

In FIG. 17, arrows schematically indicate a convection airflow in heating chamber 5 by the operation of circulation fan 11. As described above, circulation fan 11 is configured to suck air inside heating chamber 5 through the central portion of circulation fan 11 and blow the air in the centrifugal direction.

First air guide 27a guides air sucked from heating chamber 5 by circulation fan 11 to convection heater 10 via first opening group 25a. This air is heated by convection heater 10 and becomes hot air.

This hot air passes through catalyst 26 for purification and then is sucked by circulation fan 11 to be blown in the centrifugal direction. Second air guide 27b guides the hot air blown from circulation fan 11 to near the top face, and then third air guide 28a guides the hot air along the top face of heating chamber so that the hot air is blown in a substantially uniform manner.

Subsequently, fourth air guide 28b guides this hot air to air passage 13 through second opening group 25b and inflow port 13a. Hot air generation mechanism 22 illustrated in FIG. 18 realizes the above-described airflow.

The hot air guided by fourth air guide 28b is strongly blown in the centrifugal direction at passing through second opening group 25b by influence of suction by circulation fan 11. As described above, circulation fan 11 rotates clockwise in the front view in the exemplary embodiment. The airflow will be described below.

Most of the hot air passing through second opening group 25b is blown to the front in a direction slightly leftward in the front view (arrows A3). In the hot air indicated by arrows A3, the hot air near first flow guide 14a (arrow A4) is guided to outflow port 13d by guide face 14c of first flow guide 14a.

In the hot air indicated by arrows A3, the hot air near side wall 13b1 is guided to outflow port 13d by side wall 13b1 (arrow A5) or second flow guide 14b (arrow A6).

In the hot air passing through second opening group 25b, the hot air blown to the right of first flow guide 14a (arrow A7) is guided to outflow port 13d by side wall 13b2 (arrow A8).

In the hot air blown to the right of first flow guide 14a (arrow A7), the hot air reaching side wall 13b3 (arrow A9) is guided to outflow port 13d by side wall 13b3 and second flow guide 14b.

In this way, as illustrated in FIG. 16, flow guide 14 and side walls 13b1 to 13b3 guide the air entering air passage 13 from the plurality of directions toward outflow port 13d. Accordingly, the hot air is mostly blown right downward without being biased in one direction when the hot air is blown into heating chamber 5. As a result, uneven heating of the heating target placed at the center of heating chamber 5 can be reduced.

Next is described a detailed arrangement and direction of flow guide 14 when circulation fan 11 is configured to rotate clockwise in the front view. In the exemplary embodiment, first flow guide 14a is disposed to the back right of outflow port 13d, and extends from near outflow port 13d to the back right. Second flow guide 14b is disposed to the front left of outflow port 13d and extends from near outflow port 13d to the front left.

As illustrated in FIG. 16, in a plan view, first flow guide 14a and second flow guide 14b are disposed on the right side and left side, respectively, of center line P relative to the right-left direction of air passage 13. In other words, in the plan view, first flow guide 14a and second flow guide 14b are disposed on different sides with center line P therebetween relative the right-left direction of air passage 13.

As illustrated in FIG. 15, angle α (α < 90°) of first flow guide 14a relative to side wall 13b3 is larger than angle β (β < 90°) of second flow guide 14b relative to side wall 13b3.

The above arrangement can prevent air entering from the left side of first flow guide 14a from escaping to the right side of first flow guide 14a and outflow port 13d. Accordingly, a passage to guide air from the left side of first air guide to outflow port 13d can be formed.

Here, in the plan view, air passage 13 is virtually divided into two left and right areas of flow guide 14 by first flow guide 14a, outflow port 13d, and second flow guide 14b. In this case, flow guide 14 guides air entering from the left side to outflow port 13d via a passage formed in the left area.

Furthermore, flow guide 14 can prevent air entering from right side from escaping to the left side of first flow guide 14a and outflow port 13d. Accordingly, a passage to guide air from the right side to outflow port 13d can be formed.

In other words, in the plan view, when air passage 13 is divided into two areas by first flow guide 14a, outflow port 13d, and second flow guide 14b, air entering from the right area is guided to outflow port 13d via a passage formed in the right area.

When circulation fan 11 is configured to rotate counterclockwise in the front view, first flow guide 14a and second flow guide 14b in the exemplary embodiment are reversed right and left. Accordingly, an effect similar to the case of clockwise rotation of circulation fan 11 in the front view can be obtained.

### [In-chamber temperature detection and empty heating detection]

As described above, in-chamber temperature detection sensor 50 is disposed at the predetermined position relative to air passage 13 and flow guide 14. In heating cooker 1, in-chamber temperature detection sensor 50 detects an in-chamber temperature at least when an air circulation flow passage is established in heating chamber 5 by the operation of circulation fan 11. In other words, in-chamber temperature detection sensor 50 detects the in-chamber temperature when exposed to air circulating in heating chamber 5.

When circulation fan 11 is stopped, heating cooker 1 does not perform heating for cooking, and in-chamber temperature detection sensor 50 does not detect the in-chamber temperature. When a temperature is continuously detected when heating for cooking is not performed, abnormal in-chamber temperature may be erroneously detected due to residual heat of, for example, grill heater 9 in a condition circulation fan 11 is stopped. Temperature detection by in-chamber temperature detection sensor 50 is stopped while circulation fan 11 is stopped in order to avoid this erroneous detection.

In-chamber temperature detection sensor 50 is disposed at a position exposed to circulating air blown through second opening group 25b. In other words, in-chamber temperature detection sensor 50 is disposed inside air passage 13.

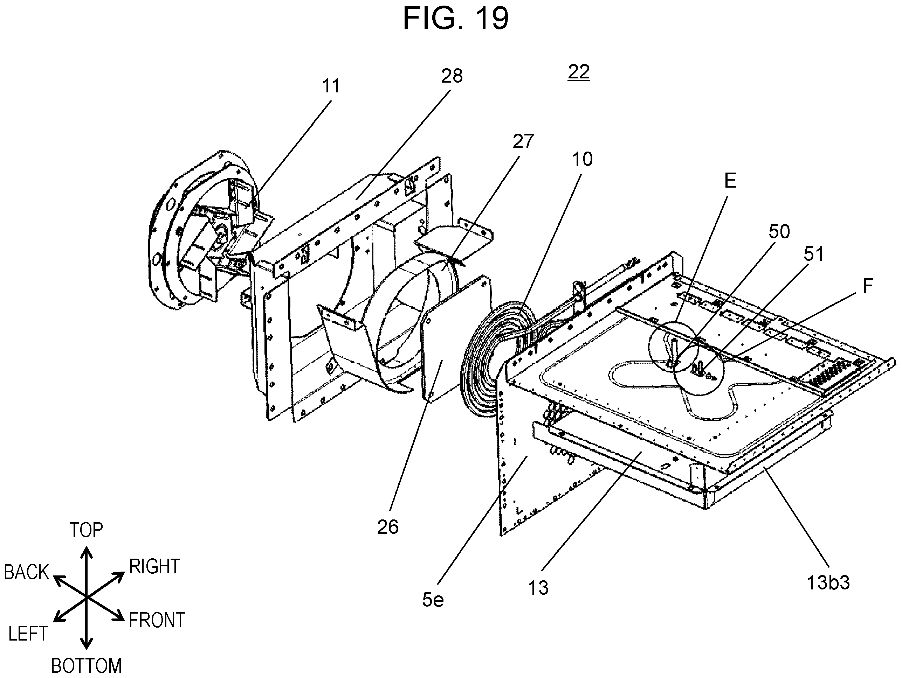

FIG. 19 is an exploded perspective view of hot air generation mechanism 22. As illustrated in FIG. 19, in-chamber temperature detection sensor 50 is disposed at placement position E and exposed to the circulating air blown through second opening group 25b. In-chamber temperature detection sensor 50 is arranged to protrude inside air passage 13 from the top face of air passage 13. This arrangement enables in-chamber temperature detection sensor 50 to accurately detect the temperature of hot air blown by the circulation fan.

As described above, in the exemplary embodiment, in-chamber temperature detection sensor 50 detects the in-chamber temperature while circulation fan 11 is operated. Stoppage of circulation fan 11 means heating for cooking is stopped. In heating cooker 1, circulation fan 11 operates during heating for cooking even when convection heater 10 is stopped, and thus the air circulation flow passage is established in heating chamber 5 and air passage 13.

Next, empty heating detection sensor 51 will be described. In an experiment of empty heating detection by the inventors of the present disclosure, a sudden temperature rise is found to be detected immediately after starting microwave heating. Accordingly, "empty heating" is detectable by detecting the sudden temperature rise immediately after starting microwave heating by empty heating detection sensor 51.

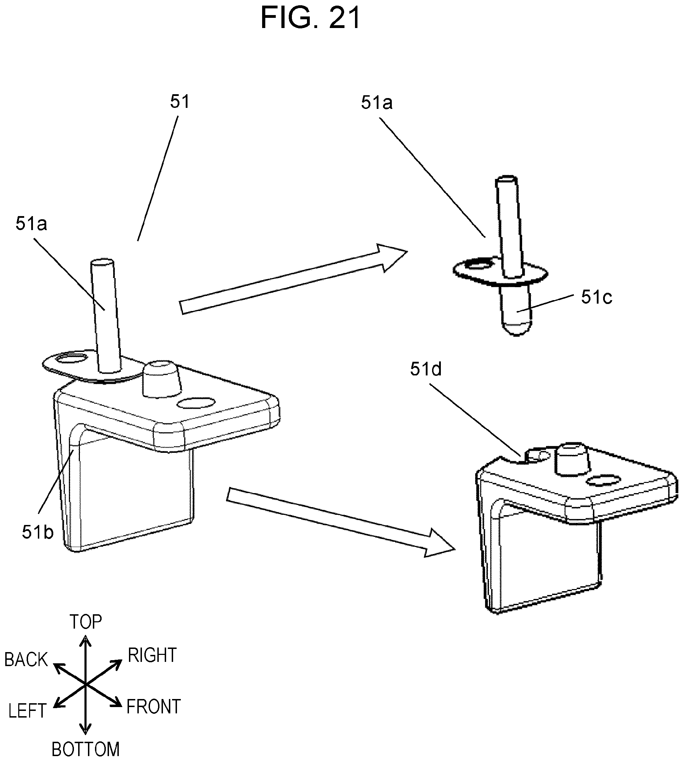

FIG. 21 is an exploded perspective view of empty heating detection sensor 51. As illustrated in FIG. 21, empty heating detection sensor 51 includes thermistor 51a with protective tube 51c at its tip and dielectric 51b. Dielectric 51b has recess 51d to insert protective tube 51c. Protective tube 51c is completely covered in recess 51d. Thermistor 51a and dielectric 51b have respective sheet-like protrusions to be screwed onto the top face above air passage 13.

Empty heating detection sensor 51 can detect a sudden temperature rise immediately after starting microwave heating because a temperature of dielectric 51b rises by being heated by microwave. Dielectric 51b is not a conductive body and thus has low dielectric constant. For example, the dielectric is made of ceramic. More specifically, dielectric 51b is made of cordierite.

When microwave heating is applied to the heating target placed in heating chamber 5, the heating target is heated by absorbing microwave. However, in a state of "empty heating" without the heating target in heating chamber 5, microwave heating is applied to dielectric 51b that has smaller capacity than the heating target. Therefore, the temperature of dielectric 51b increases in a short time. As a result, empty heating detection sensor 51 can detect the state of "empty heating" by detecting this sudden temperature rise.

The sudden temperature rise means that there is a large difference between a detected temperature and a reference in-chamber temperature stored in the controller. The reference in-chamber temperature is obtained by multiplying a rotational speed of circulation fan by output power.

In the exemplary embodiment, the controller determines a state as "empty heating" when empty heating detection sensor 51 detects the sudden temperature rise in microwave heating, and immediately stops the heating operation. Then, the controller notifies the user that heating cooker 1 is in the state of "empty heating".

In this way, empty heating detection sensor 51 detects the empty heating. Thermistor 51a can more accurately detect the temperature rise of dielectric 51b with larger contact area between dielectric 51b and thermistor 51a. As a result, further accurate detection of empty heating becomes feasible.

However, the present disclosure is not limited to this structure. Dielectric 51b may partially contact thermistor 51a or the dielectric may cover the thermistor with a space in between. Similarly, dielectric 51b is not limited to the exemplary embodiment.

Note that detected temperature may vary when air flowing in the passage directly contacts the thermistor. Therefore, a temperature is accurately detectable without a direct contact of air and thermistor by covering thermistor 51a with dielectric 51b..

The size and shape of dielectric 51b are determined as appropriate according to a heat-resistant temperature of the thermistor to be used and temperature to be measured. Thus, it is necessary to consider a temperature rise of the dielectric according to, for example, output of heating cooker 1 and heating time.

Empty heating detection sensor 51 is disposed at a position where microwave emitted from underneath heating chamber 5 can be absorbed. In the exemplary embodiment, empty heating detection sensor 51 is disposed vertically above outflow port 13d in air passage 13.

More specifically, in heating cooker 1 in the exemplary embodiment, empty heating detection sensor 51 is disposed at placement position F at substantially the center of the top face of air passage 13 vertically above outflow port 13d (FIG. 18) and protrudes from the top face of air passage 13 to inside air passage 13. As described above, outflow port 13d is disposed at substantially the center of heating chamber 5. Therefore, empty heating detection sensor 51 can receive microwave from entire heating chamber 5.

As described above, empty heating detection sensor 51 is disposed at placement position F in the exemplary embodiment. Accordingly, the in-chamber temperature of heating chamber 5 is accurately detectable, and "empty heating" during microwave heating can be detected in a short time. As a result, the microwave heating can be stopped before microwave not consumed in heating chamber 5 returns to magnetron 15 and damage magnetron 15.

As described above, in the exemplary embodiment, in-chamber temperature detection sensor 50 and empty heating detection sensor 51 are disposed at predetermined positions in the circulation flow passage in order to accurately detect the temperature inside heating chamber 5. Accordingly, the in-chamber temperature and its change can be accurately detected. As a result, the heating cooker according to the exemplary embodiment can detect "empty heating" during microwave heating.

### [Advantages of exemplary embodiment]

The exemplary embodiment achieves the following advantages.

The heating cooker according to the exemplary embodiment includes the heating chamber, the circulation fan, and the air passage. The heating chamber can accommodate the heating target. The circulation fan sucks air in the heating chamber and blows sucked air into the heating chamber to form the circulation flow passage in the inner space of the heating chamber. The air passage is disposed inside the heating chamber and defines the flow rate and the blowing direction of air blown from the circulation fan to the heating chamber. The air passage is disposed in the upper part of the heating chamber and partitioned with a plurality of walls to form the upper space of the heating chamber. The air passage includes the flow guide and the outflow port communicating with the heating chamber.

According to the exemplary embodiment, the airflow in the upper space of the heating chamber can be defined by guiding the air with the flow guide. As a result, the air can be blown through the outflow port in a predetermined direction.

In the heating cooker according to the exemplary embodiment, the outflow port is round and disposed on the bottom wall of the air passage at substantially the center of the heating chamber in a plan view.

The round outflow port according to the exemplary embodiment inhibits a change of direction of air entering the outflow port, compared with a square outflow port. Accordingly, the air can be blown in the predetermined direction, i.e., right downward. Furthermore, the heating target can be easily heated uniformly by directing the air blown downward from the outflow port to the center of the bottom wall of the heating chamber.

In the heating cooker according to the exemplary embodiment, the flow guide has the guide face that defines the path of air blown by the circulation fan. The guide face is disposed substantially perpendicular to the bottom wall of the air passage. According to the exemplary embodiment, the air can be guided in the predetermined direction toward the outflow port.

In the heating cooker according to the exemplary embodiment, the flow guide has the first flow guide and the second flow guide disposed on the bottom face of the air passage. The first flow guide is disposed behind the outflow port and is disposed at a position shifted from the center in the right-left direction to the side where a relatively small quantity of air is blown from the circulation fan to the heating chamber. The second flow guide is disposed in front of the outflow port and is disposed at a position shifted from the center in the right-left direction to the side where a relatively large quantity of air is blown from the circulation fan to the heating chamber. The flow guide guides air blown from the circulation fan to the heating chamber in a plurality of directions toward the outflow port.

According to the exemplary embodiment, the flow guide can guide the hot air from the predetermined direction toward the outflow port. Furthermore, since the flow guide guides air from the plurality of directions toward the outflow port, the hot air from the plurality of directions collide at the outflow port. Accordingly, forces in the plurality of directions cancel each other so that the hot air can be mostly directed right downward.

The heating cooker according to the exemplary embodiment further includes the grill heater that is disposed in the upper part of the heating chamber to heat inside the heating chamber. The air passage is disposed between the top face of the heating chamber and the grill heater. The air passage is configured with the bottom wall and three side walls. The three side walls are a left side wall, a right side wall, and a front side wall in a front view. The inflow port is disposed at the back of the air passage in the front view.

According to the exemplary embodiment, the air passage forms a semi-isolated space surrounded by the side walls except for the inflow port and the outflow port. The air passage can define the path of air.

In the heating cooker according to the exemplary embodiment, the circulation fan rotates clockwise in a front view. In the front view, the first flow guide is disposed to the back right of the outflow port and extends from near the outflow port to the back right. The second flow guide is disposed to the front left of the outflow port and extends from near the outflow port to the front left.

According to the exemplary embodiment, air guided by the flow guide is blown right downward through the outflow port into the heating chamber. As a result, uneven heating of the heating target placed at the center of the heating chamber can be reduced.

In the heating cooker according to the exemplary embodiment, the circulation fan rotates counterclockwise in a front view. In the front view, the first flow guide is disposed to the back left of the outflow port and extends from near the outflow port to the back left. The second flow guide is disposed to the front right of the outflow port and extends from near the outflow port to the front right.

According to the exemplary embodiment, advantages similar to that of the circulation fan rotating clockwise, in the front view, can be achieved.

In the heating cooker according to the exemplary embodiment, the first flow guide and the second flow guide are disposed, in a plan view, on the right side and left side, respectively, of the center line relative to the right-left direction. In other words, in the plan view, the first flow guide and the second flow guide are disposed so as to interpose the center line between the first flow guide and the second flow guide relative to the right-left direction of the air passage.

According to the exemplary embodiment, the path of air entering from the left side of the first flow guide and the path of air entering from the right side of the first flow guide can be defined.

In the heating cooker according to the exemplary embodiment, angle α of the first flow guide formed with the front side wall is larger than angle β of the second flow guide formed with the front side wall in the air passage.

The exemplary embodiment can prevent air entering from the left side of the first flow guide from escaping to the right side of the first flow guide and the outflow port. Accordingly, a passage to guide air from the left side of the first flow guide to the outflow port can be formed.

Furthermore, the exemplary embodiment can prevent air entering from the right side of the first flow guide from escaping to the left side of the first flow guide and the outflow port. Accordingly, a passage to guide air from the right side of the first flow guide to the outflow port can be formed.

### INDUSTRIAL APPLICABILITY

The present disclosure is applicable to heating cookers for heating food, and more particularly, to ovens and microwave ovens.

### REFERENCE MARKS IN THE DRAWINGS

- 1: heating cooker
- 2: main body
- 3: machine chamber
- 4: door
- 5: heating chamber
- 5a: bottom wall
- 5e: back wall
- 6: operation display
- 7: table
- 8: tray
- 9: grill heater
- 10: convection heater
- 11: circulation fan
- 12: fan drive unit
- 13: air passage
- 13a: inflow port
- 13b1, 13b2, 3b3: side wall
- 13c: bottom wall
- 13d: outflow port
- 13e: upper wall
- 14: flow guide
- 14a: first flow guide
- 14b: second flow guide
- 14c: guide face
- 15: magnetron
- 16: inverter
- 17: cooling fan
- 18: waveguide
- 19: microwave supply part
- 20: convection device
- 21: microwave heater
- 22: hot air generation mechanism
- 23: stirrer
- 24: handle
- 25: opening group
- 25a: first opening group
- 25b: second opening group
- 26: catalyst
- 27: air guide frame
- 27a: first air guide
- 27b: second air guide
- 27c: notch
- 27c1: first notch
- 27c2: second notch
- 27d: notch
- 27d1: third notch
- 27d2: fourth notch
- 28: hot air circulation frame
- 28a: third air guide
- 28b: fourth air guide
- 30: ventilation panel
- 50: in-chamber temperature detection sensor
- 51: empty heating detection sensor
- 51a: thermistor
- 51b: dielectric
- 51c: protective tube
- 51d: recess

## Claims

1. A heating cooker comprising:
a heating chamber configured to accommodate a heating target;
a circulation fan configured to suck air in the heating chamber and blow sucked air into the heating chamber to form a circulation flow passage in an inner space of the heating chamber; and
an air passage disposed inside the heating chamber and is configured to define a flow rate and a blowing direction of air blown from the circulation fan to the heating chamber, wherein
the air passage is disposed in an upper part of the heating chamber and forms an upper space of the heating chamber, and the upper space is partitioned with a plurality of walls, and
the air passage includes a flow guide and an outflow port communicating with the heating chamber.

2. The heating cooker of claim 1, wherein
the outflow port is round and disposed on a bottom wall of the air passage, and the outflow port is located at a center of the heating chamber in a plan view.

3. The heating cooker of one of claim 1 or 2, wherein
the flow guide has a guide face that defines a path of the air blown by the circulation fan, and the guide face is perpendicular to the bottom wall of the air passage.

4. The heating cooker of one of claims 1 to 3, wherein
the flow guide includes a first flow guide and a second flow guide each disposed on the bottom wall of the air passage,
the first flow guide is disposed behind the outflow port at a position shifted from a center in a right-left direction to a side where a relatively small quantity of air is blown from the circulation fan to the heating chamber,
the second flow guide is disposed in front of the outflow port at a position shifted from the center in the right-left direction to a side where a relatively large quantity of air is blown from the circulation fan to the heating chamber, and
the flow guide is configured to guide air entering the air passage from a plurality of directions toward the outflow port.

5. The heating cooker of one of claims 1 to 4, further comprising a grill heater disposed in the upper part of the heating chamber and configured to heat inside the heating chamber, wherein
the air passage is disposed between a top face of the heating chamber and the grill heater,
the air passage is configured with the bottom wall and three side walls, and the three side walls are a left side wall, a right side wall, and a front side wall in a front view, and
the air passage includes an inflow port on a back side of the air passage in the front view.

6. The heating cooker of claim 4, wherein
the circulation fan is configured to rotate clockwise in a front view,
the first flow guide is disposed on a back right side of the outflow port, in the front view, and extends from near the outflow port toward the back right side, and
the second flow guide is disposed on a front left side of the outflow port, in the front view, and extends from near the outflow port toward the front left side.

7. The heating cooker of claim 4, wherein
the circulation fan is configured to rotate counterclockwise in a front view,
the first flow guide is disposed on a back left side of the outflow port, in the front view, and extends from near the outflow port toward the back left side, and
the second flow guide is disposed on a front right side of the outflow port, in the front view, and extends from near the outflow port toward the front right side.

8. The heating cooker of claim 4, wherein
the first flow guide and the second flow guide interpose a center line between the first flow guide and the second flow guide relative to the right-left direction of the air passage in a plan view.

9. The heating cooker of claim 5, wherein
the first flow guide in the air passage forms an angle with the front wall larger than an angle formed by the second flow guide with the front side wall.
